# DEMANDE DE BREVET EUROPEEN

(11) **EP 1 484 149 A1**
(43) Date de publication de la demande: **08.12.2004**
(21) Numéro de dépôt: 03012808.6
(22) Date de dépôt: 05.06.2003
(51) Int. Cl.: B29C 44/34, B29C 44/22

(54) **Procédé pour la production continue de profilés pleins, creux ou ouverts**

(71) Demandeur: NMC S.A., B-4731 Raeren (BE)
(72) Inventeur: Navez, Vincent, 1348 Louvain-la-Neuve (BE); Frere, Robert, 4850 Plombieres (BE); Mayeres, Jean-Pierre, 4700 Eupen (BE); Noel, Emmanuel, 4700 Eupen (BE)
(74) Mandataire: Kihn, Pierre Emile Joseph

(57) **Abrégé**

L'invention concerne un procédé de fabrication de profilés pleins, creux ou ouverts, en particulier ceux comportant des arêtes vives à base de polystyrène comportant les étapes suivantes :
- Dosage de polymères comprenant du polystyrène et optionnellement d'autres additifs et adjuvants
- Plastification des composantes dans une extrudeuse afin d'obtenir un mélange homogène,
- Injection d'un gaz sous pression via un port d'injection
- Malaxage et mise sous pression dudit mélange homogène et du gaz jusqu'à une dissolution complète du gaz pour obtenir un mélange en une seule phase,
- Refroidissement progressif dudit mélange en une seule phase afin de maintenir la pression nécessaire à la solubilisation du gaz,
- Passage dudit mélange en une seule phase mélange dans un outil de mise en forme afin de former une mousse,
- Passage de la mousse ainsi formée à travers un système de calibrage optionnellement contrôlé en température,
- Tirage motorisé de la mousse calibrée.

## Description

La présente invention concerne un procédé pour la production continue de profilés pleins, creux ou ouverts, en particulier ceux comportant des arêtes vives, par extrusion de matières thermoplastiques en particulier de polystyrènes.

Depuis de nombreuses années, on fabrique des profilés de polystyrène ayant une densité supérieure à 400 kg/m3 pour une utilisation dans la décoration intérieure ou extérieure des habitations. Ces profilés de formes diverses ont un aspect décoratif marqué et sont souvent utilisés pour remplacer ou imiter des décorations de plafonds en stuc.

Afin de pouvoir réaliser des profilés avec des décors complexes de bonne qualité et ayant un aspect de surface acceptable, il est nécessaire que les profilés aient une structure régulière, c'est-à-dire des cellules fines et uniformes. Si les cellules sont irrégulières, des défauts de surface sont visibles et les profilés ne sont pas commercialisables.

Malgré de nombreux efforts, il n'a pas été possible de produire des tels profilés en polystyrène ayant une densité inférieure à 400 kg/m3. En effet, dès que l'on essaye de fabriquer des profilés ayant une densité inférieure à cette valeur, on obtient des structures qui ne sont pas assez régulière pour obtenir des profilés ne présentant pas de défauts de surface gênants.

Le but de la présente invention est de proposer un nouveau procédé de fabrication pour des profilés comprenant une mousse de polystyrène ayant une densité comprise entre 200 kg/m3 et 350 kg/m3.

Le but est atteint par un procédé de fabrication de profilés pleins, creux ou ouverts, en particulier ceux comportant des arêtes vives à base de polystyrène comportant les étapes suivantes :
- Dosage de polymères comprenant du polystyrène et optionnellement d'autres additifs et adjuvants
- Plastification des composantes dans une extrudeuse afin d'obtenir un mélange homogène,
- Injection d'un gaz sous pression via un port d'injection
- Malaxage et mise sous pression dudit mélange homogène et du gaz jusqu'à une dissolution complète du gaz pour obtenir un mélange en une seule phase,
- Refroidissement progressif dudit mélange en une seule phase afin de maintenir la pression nécessaire à la solubilisation du gaz,
- Passage dudit mélange en une seule phase mélange dans un outil de mise en forme afin de former une mousse,
- Passage de la mousse ainsi formée à travers un système de calibrage optionnellement contrôlé en température,
- Tirage motorisé de la mousse calibrée,

Ce procédé permet de réaliser de mousses à base de polystyrène ayant une densité comprise entre 200 kg/m3 et 350 kg/m3 tout en présentant un aspect de surface lisse et sans défauts apparents.

Le procédé permet d'augmenter la production de profilés et la qualité des cellules est bien uniforme. Les profilés obtenus sont moins de matières premières sont utilisées.

Selon un premier mode de réalisation avantageux, le polymère mis en oeuvre est choisi dans le groupe constitué de polystyrène, d'acrylonitrile-butadiène-styrène (ABS), de styrène-butadiène-styrène (SBS), de styrène-ethylène-butadiène-styrène (SEBS) ou de leurs mélanges.

On peut également utiliser plusieurs sortes de polystyrènes, différant en viscosité et donc en masse moléculaire, seuls ou en mélange avec d'autre copolymères de styrène et d'un monomère diène. Des copolymères adéquats sont par exemple l'acrylonitrile-butadiène-styrène (ABS), dle styrène-butadiène-styrène (SBS), le styrène-ethylène-butadiène-styrène (SEBS) ou leurs mélanges.

Il est également possible de modifier une partie ou toute la surface du profilé de mousse primaire solidifié en lui adjoignant une couche supplémentaire de matière par coextrusion. Cette matière coextrudée peut être à l'état moussée ou compacte.

Le gaz de moussage préférablement utilisé est le CO₂ .

D'autres particularités et caractéristiques de l'invention ressortiront de la description détaillée de quelques modes de réalisation avantageux présentés ci-dessous, à titre d'illustration.

### 1.Procédé de fabrication:

### 1.1. Dosage des composants:.

Les composants de la formulation sont dosés individuellement par une station de dosage de type volumétrique ou gravimétrique, pour réaliser précisément la composition voulue. Les matières premières sont de préférence sous forme de granulés réguliers, ayant si possible la même taille et la même forme d'un composant à l'autre. On préférera aussi que la densité apparente soit dans une fourchette étroite entre les divers composants, afin de ne pas provoquer un démélange précoce.

### 1.2. Extrudeuse:

Les composants ainsi dosés sont acheminés vers l'alimentation d'une extrudeuse plastificatrice. Cette extrudeuse comporte de préférence deux vis, qui peuvent être co- ou contre-rotatives, auto-nettoyante ou pas. Le cylindre comporte plusieurs zones de chauffage. La première partie du cylindre est chauffée à haute température, afin de plastifier les composants solides dosés à l'alimentation, tout en les malaxant pour homogénéiser le tout. A l'endroit le plus favorable du point de vue de la viscosité et de la pression dans le cylindre, on injecte un gaz sous pression via un port d'injection foré dans le cylindre. Le gaz sera maintenu dans sa phase condensée, en particulier un état supercritique dans le cas du CO₂ (voir point 2.2.).Le mélange des composants et du gaz sont malaxés et pressurisés afin d'obtenir une bonne homogénéité et une dissolution optimale du gaz dans le mélange fondu pour obtenir une seule phase. Les zones du cylindres sont ensuite progressivement plus froide afin de maintenir la pression nécessaire à la solubilisation du gaz.

### 1.2. Refroidissement:

Il peut se faire selon deux dispositions:
i) Échangeur de chaleur "dynamique" par l'emploi d'une configuration de vis longues: la première partie du cylindre ayant servi à la plastification et à l'homogénéisation des composants solides avec le gaz décrite au point b) précédent, la seconde partie de la vis, dont les zones sont refroidies par circulation d'un fluide caloporteur, permet le refroidissement du mélange monophasique. Le design de la vis de cette dernière partie est spécifiquement adapté pour générer le moins possible de chaleur par cisaillement.
ii) Échangeur de chaleur "statique": le mélange homogène des composants plastifiés + le gaz quittent le cylindre de l'extrudeuse pour passer à travers un échangeur de chaleur, parcouru d'un fluide caloporteur, dont le concept doit permettre une régulation de la température de mélange au dixième de degré près.

### 1.4. Homogènéisation:

Le mélange refroidi est éventuellement à nouveau homogénéisé, par passage dans un mélangeur statique qui va diviser le flux en plusieurs "canaux" que seront croisés et redistribués, afin de rendre le profil de température d'une section perpendiculaire du flux le plus plat possible.

### 1.5. Relaxation:

On peut éventuellement adjoindre une section de relaxation du flux, en plaçant un tube vide sur une distance adéquate. Ceci permet aux tensions internes dues au cisaillement, ainsi qu'aux effets "mémoire" viscoélastiques de se relâcher et assurer un écoulement plus régulier du flux.

### 1.6. Filière de moussage:

Le mélange homogène, monophasique des composants plastifiés et du gaz va à présent passer dans l'outil de mise en forme, constitué d'une filière guidant le flux vers la forme de moussage voulue. La perte de charge que subit le mélange depuis la sortie du cylindre diminue sans cesse la pression du mélange; à un moment cette pression chute en dessous du seuil critique où le gaz, auparavant solubilisé, va sursaturer le mélange et des bulles de gaz vont alors prendre naissance, formant une deuxième phase discrète. Idéalement, la zone de formation de ces bulles primaires ne doit pas se passer trop tôt, sous peine d'occasionner un prémoussage donnant une mousse déformée et instable, avec une surface peu attractive. Les moyens d'actions sur l'endroit où se produit cette étape critique de démixtion sont multiples: viscosité des composants, température de l'outil, proportion de gaz, forme de l'outil, débit de l'extrudeuse...tous ces paramètres doivent être optimisés pour chaque profil de mousse à réaliser.

### 1.7. Mise en forme:

La mousse sort à l'atmosphère, à haute température, et s'expanse librement. La viscosité des parois cellulaires augmente avec le refroidissement et la migration du gaz dans les cellules, jusqu'à figer la structure cellulaire. Mais ce processus prend du temps, et la forme de la mousse n'est pas stable immédiatement. Pour contrôler les dimensions de la mousse, on la fait passer à travers un système de calibrage, par un tirage motorisé en fin de la ligne d'extrusion. Les calibreurs, éventuellement contrôlés en température pour un contrôle plus efficace de la forme surtout au début lorsque la mousse est la plus chaude, imposent progressivement à la masse moussée sa forme définitive.

### 1.8. Coextrusion en ligne (optionnel):

Il est possible de modifier une partie ou toute la surface du profilé de mousse primaire solidifié en lui adjoignant une couche supplémentaire de matière par coextrusion. Cette couche secondaire, qui doit être compatible avec la première pour assurer une bonne cohésion, peut avoir pour fonction un renforcement des propriétés mécaniques, un effet décoratif, ... La couche secondaire peut être compacte ou bien moussée.

### 1.9. Ornementation en ligne (optionnel):

Il est possible d'imprimer des motifs décoratifs sur une portion choisie du profilé, par exemple via un rouleau chauffant pressé contre la mousse préalablement réchauffée localement, ou par un système de presse avançant avec le profil, ou tout autre procédé connu de l'homme de l'Art.

### 1.10. Tirage et coupe:

La mousse est donc tirée par une étireuse motorisée, simple ou double suivant le nombre de profilés extrudés en parallèle. Le profilé est alors coupé à longueur par une scie, assurant une coupe bien perpendiculaire.

### 1.11. Ornementation hors ligne (optionnel):

Il est possible d'imprimer des motifs décoratifs sur une portion choisie du profilé découpé, par exemple via un rouleau chauffant pressé contre la mousse préalablement réchauffée localement, ou par un système de presse avançant avec le profil, ou tout autre procédé connu de l'homme de l'Art.

### 2.Matières premières:

### 2.1. polymères:

Le polystyrène est utilisé comme résine de base. La viscosité du polystyrène sera adaptée en fonction du profil de mousse, la pression nécessaire à l'obtention d'une bonne qualité, le débit d'extrusion souhaitable. Plusieurs sortes de polystyrènes, différant en viscosité et donc en masse moléculaire, peuvent être utilisées seuls ou en mélange. On peut aussi ajouter des copolymères de styrène et d'un monomère diène, possédant une meilleure résistance à l'impact et une meilleure élasticité. Par exemple: Acrylonitrile-Butadiène-styrène (ABS), Styrène-Butadiène-Styrène (SBS), Styrène-Ethylène-Butadiène-Styrène (SEBS),...

On peut également ajouter de la matière recyclée, compatible avec l'ensemble des composants, par exemple des déchets de profils moussés préalablement broyés, dégazés et densifiés.

Dans le cas d'une couche coextrudée sur la mousse de base, les matériaux seront choisis selon qu'ils sont capables de former une liaison cohésive suffisante avec la mousse de base. Il peut s'agir de thermoplastiques, de thermodurcissables.

### 2.2. Gaz:

Le gaz utilisé est de préférence du CO₂. Stocké dans un réservoir sous pression et température telles qu'il se trouve à l'état liquide. Il ne faut en aucun cas dépasser 31.1°C, au delà le CO₂ devient supercritique et a donc une densité nettement plus faible que le liquide, ce qui rend son pompage délicat. Le CO₂ est pompé dans des conduites refroidies bien en dessous de la température critique, afin de maintenir l'état liquide, jusqu'au dispositif de régulation du débit d'injection. Il s'agit d'un débitmètre fonctionnant selon l'effet Coriolis, qui permet de relier la masse du gaz dosée par unité de temps à une différence de vitesse de vibration induite par le passage du fluide dans une conduite en vibration. Ce débitmètre ne fonctionnant que pour des liquides, il est donc primordial, que le CO₂ reste dans cet état. Le CO₂ liquide est alors amené dans le cylindre de l'extrudeuse via un pore d'injection, muni d'une vanne antiretour.

### 2.3. additifs:

### a. agent nucléant:

Les cellules de la mousse sont régularisées grâce à l'emploi d'un composé qui va favoriser une répartition homogène des cellules dans la mousse. Il peut s'agir de produits passifs, ne réagissant pas chimiquement, tels le talc, le carbonate de calcium, la silice, ...On peut employer également des produits dits "actifs" qui vont se décomposer sous l'action de la chaleur, en dégageant une phase gazeuse. La réaction favorise la nucléation homogène, la présence de domaines de gaz finement divisé également. Les combinaisons d'acide citrique et de bicarbonate de sodium, l'azodicarbonamide, l'OBSH,... sont bien connus.

### b. Additifs d'aide au process:

Il s'agit de composés facilitant l'extrusion du mélange de polystyrène, par un effet de lubrification interne ou externe. Il s'agit généralement d'une molécule ayant un bas poids moléculaire. Parmi les produits connus, citons les esters de C4-C20 monoalcohols, les amides d'acide gras, les cires de polyéthylène, les cires de polyéthylène oxydé, les cires styrèniques, les alcools C1-C4, les composés siliconés etc. Ces composés peuvent être soit ajoutés au mélange dès l'entrée de l'extrudeuse, sous forme de mélange maître à base de polystyrène, soit injectés sous forme liquide dans l'extrudeuse, soit encore injecté avec régularité et précision à l'endroit adéquat de l'outil d'extrusion via un anneau répartiteur, afin de tapisser exclusivement et régulièrement le canal d'écoulement de la filière pour constituer un film ayant un coefficient de friction très bas.

### c. Pigments:

On peut colorer uniformément la masse de mousse par l'utilisation de pigments ajoutés à l'alimentation de l'extrudeuse. Il est également possible d'obtenir un "effet bois" en utilisant des associations de pigments de couleurs ayant des viscosités très différentes, par exemple combiner un mélange maître de couleur claire sur base d'un polymère à haute viscosité avec mélange maître de couleur foncée sur base d'un polymère à basse viscosité.

### d. Autres additifs:

Citons encore, de manière non exhaustive:
- Antifeu (halogènés [chlorés, brômés, fluorés,...] ou non [hydroxydes, phosphates, graphite expansible,...];
- AntiUV;
- Antioxydants;
- Charges minérales diverses;
- Fibres de renfort (verre, cellulose,...)

## Revendications

1. Procédé de fabrication de profilés pleins, creux ou ouverts, en particulier ceux comportant des arêtes vives à base de polystyrène comportant les étapes suivantes :
• Dosage de polymères comprenant du polystyrène et optionnellement d'autres additifs et adjuvants
• Plastification des composantes dans une extrudeuse afin d'obtenir un mélange homogène,
• Injection d'un gaz sous pression via un port d'injection
• Malaxage et mise sous pression dudit mélange homogène et du gaz jusqu'à une dissolution complète du gaz pour obtenir un mélange en une seule phase,
• Refroidissement progressif dudit mélange en une seule phase afin de maintenir la pression nécessaire à la solubilisation du gaz,
• Passage dudit mélange en une seule phase mélange dans un outil de mise en forme afin de former une mousse,
• Passage de la mousse ainsi formée à travers un système de calibrage optionnellement contrôlé en température,
• Tirage motorisé de la mousse calibrée,

2. Procédé selon la revendication 1, **caractérisé en ce que** le polymère mis en oeuvre est choisi dans le groupe constitué de polystyrène, d'acrylonitrile-butadiène-styrène (ABS), de styrène-butadiène-styrène (SBS), de styrène-ethylène-butadiène-styrène (SEBS) ou de leurs mélanges

3. Procédé selon la revendication 1 ou 2, **caractérisé en ce que** l'on utilise plusieurs sortes de polystyrènes, différant en viscosité, seuls ou en mélange avec des copolymères de styrène et d'un monomère diène.

4. Procédé selon la revendication 3, **caractérisé en ce que** les copolymères sont choisis dans le groupe constitué d'acrylonitrile-butadiène-styrène (ABS), de styrène-butadiène-styrène (SBS), de styrène-ethylène-butadiène-styrène (SEBS) ou de leurs mélanges.

5. Procédé selon l'une quelconque des revendications précédentes, **caractérisé en ce que** une partie ou toute la surface du profilé de mousse solidifiée est modifié en lui adjoignant une couche supplémentaire de matière par coextrusion.

6. Procédé selon la revendication 5, **caractérisé en ce que** la matière coextrudée est à l'état moussée ou compacte.

7. Procédé selon l'une quelconque des revendications précédentes, **caractérisé en ce que** le gaz de moussage utilisé est le CO₂

8. Procédé selon l'une quelconque des revendications précédentes, **caractérisé en ce que** l'on ajoute des composés facilitant l'extrusion du mélange de polystyrène choisi dans le groupe constitué des esters de C4-C20 mono-alcools, des amides d'acide gras, des cires de polyéthylène, des cires de polyéthylène oxydé, des cires styrèniques, des alcools C1-C4, des composés siliconés et de leurs mélanges.

9. Procédé selon la revendication 8, caractérisé en ce les composés facilitant l'extrusion du mélange de polystyrène sont injectés avec régularité et précision à l'endroit adéquat de l'outil d'extrusion via un anneau répartiteur, afin de tapisser exclusivement et régulièrement le canal d'écoulement de la filière.
